(19) Europäisches Patentamt
European Patent Office
Office européen des brevets

(11) **EP 3 935 116 B1**

(12) **EUROPÄISCHE PATENTSCHRIFT**

(45) Veröffentlichungstag und Bekanntmachung des Hinweises auf die Patenterteilung:
**05.10.2022 Patentblatt 2022/40**

(21) Anmeldenummer: **19709678.7**

(22) Anmeldetag: **05.03.2019**

(51) Internationale Patentklassifikation (IPC):
***C09D 183/08*** (2006.01)

(52) Gemeinsame Patentklassifikation (CPC):
(C-Sets verfügbar)
**C08L 83/08; C09D 183/08;** C08G 77/02;
C08G 77/26 (Forts.)

(86) Internationale Anmeldenummer:
**PCT/EP2019/055423**

(87) Internationale Veröffentlichungsnummer:
**WO 2020/177859 (10.09.2020 Gazette 2020/37)**

(54) **EMULSIONEN VON AMINOSILOXANEN UND SILICATEN**

EMULSIONS OF AMINOSILOXANES AND SILICATES

ÉMULSIONS D'AMINOSILOXANES ET DE SILICATES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**12.01.2022 Patentblatt 2022/02**

(73) Patentinhaber: **Wacker Chemie AG**
**81737 München (DE)**

(72) Erfinder:
• **BREHM, Christof**
**84489 Burghausen (DE)**
• **WIMMER, Franz**
**84489 Burghausen (DE)**

(74) Vertreter: **Fritz, Helmut et al**
**Wacker Chemie AG**
**Zentralbereich Patente, Marken und Lizenzen**
**Hanns-Seidel-Platz 4**
**81737 München (DE)**

(56) Entgegenhaltungen:
**DE-A1-102014 216 380    US-A1- 2012 067 766**

(52) Gemeinsame Patentklassifikation (CPC): (Forts.)

C-Sets
**C09D 183/08, C08L 83/00**

**Beschreibung**

Die Erfindung betrifft Öl-in-Wasser Emulsionen von Aminoalkylgruppen aufweisendem Polydimethylsiloxan und Silicaten und ein Verfahren zur Behandlung von Substraten damit.

Emulsionen auf Basis von Aminosiloxanen und Silicaten dienen zur Abweisung von wässrigen Anschmutzungen bei porösen oder nicht porösen, saugfähigen oder nicht saugfähigen Substraten.

In der DE 10 2014 216 380 sind Öl-in-Wasser Emulsionen von Aminosiloxanen in Kombination mit Silicaten beschrieben, die zur hydrophobierenden Behandlung von porösen oder nicht porösen, saugfähigen oder nicht saugfähigen Substraten eingesetzt werden können.

Die in DE 10 2014 216 380 beschriebenen Formulierungen verwenden als Hilfsstoffe zur Erhöhung der Lagerstabilität Oligoglycolether, beispielsweise Diethylenglycolbutylether. Nachteil dieser Hilfsstoffe ist, dass durch die doch recht hohe Hydrophilie - hervorgerufen durch zwei oder mehr Glycolgruppen - die Abweisung von Wasser wie auch Wasser-Alkohol-Gemischen noch nicht ausreichend gut ist.

Gegenstand der Erfindung sind Öl-in-Wasser Emulsionen, die

(i) 100 Gew.-Teile von bei 20 °C flüssigen Aminoalkylgruppen aufweisendem Polyorganosiloxan (P), das mindestens 80 Mol-% Einheiten, ausgewählt aus Einheiten der allgemeinen Formeln Ia, Ib, IIa und IIb

$$R^1_2SiO_{(2/2)} \qquad (Ia),$$

$$R^1_aR^2SiO_{(3-a)/2} \qquad (Ib),$$

$$R^3_3SiO_{(1/2)} \qquad (IIa),$$

$$R^3_2R^4SiO_{(1/2)} \qquad (IIb),$$

enthält, in denen

**a** den Wert 0 oder 1 bedeutet,

$R^1$ unsubstituierte oder mit Halogenen substituierte Alkylreste mit 1-40 Kohlenstoffatomen bedeutet,

$R^2$ Aminoalkylrest der allgemeinen Formel III

$$-R^5-NR^6R^7 \qquad (III),$$

wobei

$R^5$ zweiwertigen Kohlenwasserstoffrest mit 1-40 Kohlenstoffatomen,

$R^6$ einwertigen Kohlenwasserstoffrest mit 1-40 Kohlenstoffatomen, Wasserstoff oder Alkanoylrest und

$R^7$ einen Rest der allgemeinen Formel IV

$$-(R^8-NR^6)_xR^6 \qquad (IV),$$

bedeuten, wobei

**x** den Wert 0 oder einen ganzzahligen Wert von 1 bis 40 und

$R^8$ einen zweiwertigen Rest der allgemeinen Formel V

$$-(CR^9R^9-)_y \qquad (V),$$

bedeutet, wobei

**y** einen ganzzahligen Wert von 1 bis 6,

$R^9$ Wasserstoff oder Kohlenwasserstoffrest mit 1-40 Kohlenstoffatomen bedeuten,

$R^3$ unsubstituierte oder mit Halogenen substituierte Alkylreste mit 1-40 Kohlenstoffatomen bedeuten,

$R^4$ Reste -OR oder -OH bedeuten und,

R unsubstituierte oder mit Halogenen substituierte Alkylreste mit 1-40 Kohlenstoffatomen bedeuten,

wobei im Polyorganosiloxan (P) das durchschnittliche Verhältnis der Einheiten der allgemeinen Formeln Ia und Ib zur Summe aus Einheiten der allgemeinen Formeln IIa und IIb 0,5 bis 500 beträgt und Polyorganosiloxan (P) eine durchschnittliche Aminzahl von mindestens 0,1 mequiv/g aufweist,
(ii) Protonierungsmittel,
(iii) 1 bis 80 Gew.-Teile von Silicatverbindung, ausgewählt aus dem Tetraalkoxysilicat der allgemeinen Formel VI

$$R^{10}O_4Si \qquad (VI),$$

und Polysilicatverbindung, die mindestens 80 Mol-% Einheiten der allgemeinen Formeln VII und VIII und mindestens 2 Einheiten der allgemeinen Formel VII

$$R^{10}O_3SiO_{1/2} \qquad (VII),$$

$$R^{10}O_2SiO_{2/2} \qquad (VIII),$$

aufweist, und deren Gemischen, wobei

$R^{10}$ unsubstituierte oder mit Halogenen substituierte Kohlenwasserstoffreste mit 1-18 Kohlenstoffatomen bedeuten,

(iv) Wasser,
(v) höchstens 5 Gew.-Teile Emulgator sowie
(vi) mindestens 5 Gew.-Teile eines organischen Lösemittels, ausgewählt aus Monoalkoholen der allgemeinen Formel IX

$$R^{11}\text{-OH} \qquad (IX),$$

und Dialkoholmonoethern der allgemeinen Formel X

$$R^{12}O\text{-}R^{13}\text{-}OR^{14} \qquad (X),$$

und deren Gemischen, wobei

$R^{11}$ einwertige Kohlenwasserstoffreste mit 2-18 Kohlenstoffatomen bedeuten,
$R^{12}$ einwertige Kohlenwasserstoffreste mit 1-18 Kohlenstoffatomen bedeuten,
$R^{13}$ zweiwertige Kohlenwasserstoffreste mit 2-12 Kohlenstoffatomen bedeuten,
$R^{14}$ Wasserstoff, einwertige Kohlenwasserstoffreste mit 1-6 Kohlenstoffatome oder die Acetyl-Gruppe bedeuten, mit der Maßgabe, dass die Emulsion höchstens 10 Gew.-Teile eines Di-, Tri- oder Oligogycolethers der allgemeinen Formel XI

$$R^{12}\text{-}O\text{-}(CH_2CH_2)_m\text{-}OH \qquad (XI),$$

aufweist, wobei

$R^{15}$ die Bedeutung von $R^{12}$ besitzt und
m eine ganze Zahl und gleich 2 oder größer ist.

Die Emulsionen sind trotz der geringen Menge oder Abwesenheit des Di-, Tri- oder Oligogycolethers der allgemeinen Formel XI und ohne weiteren Zusatz anderer stabilisierender Inhaltsstoffe, wie Emulgatoren oder Silicon-Polyether-Copolymer-Emulgatoren homogen, stabil und verdünnungsstabil.

Die Emulsionen zeigen hervorragende Wasserabweisung auf vielen porösen oder nicht porösen, saugfähigen oder nicht saugfähigen Substraten, insbesondere auf Fasern und Textilien. Der Test nach DIN EN 24920 an mit den Emulsionen behandelten Textilien fällt sehr gut aus.

Ferner zeigen die mit den Emulsionen behandelten Substrate verbesserte Schmutzabweisung.

Die Emulsionen zeigen weiterhin eine deutliche Glanzverbesserung auf vielen porösen oder nicht porösen, saugfähigen oder nicht saugfähigen Substraten.

Die Alkylreste $R^1$, $R^3$ und R können linear, zyklisch, verzweigt, gesättigt oder ungesättigt sein. Vorzugsweise weisen die Alkylreste $R^1$, $R^3$ und R 1-18 Kohlenstoffatome, insbesondere 1 bis 6 Kohlenstoffatome auf, besonders bevorzugt sind Methylrest oder Ethylrest. Bevorzugte Halogensubstituenten sind Fluor und Chlor. Ein besonders bevorzugter Rest $R^1$, $R^3$ und R ist der Methylrest.

Die zweiwertigen Kohlenwasserstoffreste $R^5$ können halogensubstituiert, linear, zyklisch, verzweigt, aromatisch, gesättigt oder ungesättigt sein. Vorzugsweise weisen die Reste $R^5$ 1 bis 6 Kohlenstoffatome auf, besonders bevorzugt sind Alkylenreste, insbesondere Propylen. Bevorzugte Halogensubstituenten sind Fluor und Chlor.

Die einwertigen Kohlenwasserstoffreste $R^6$ können halogensubstituiert, linear, zyklisch, verzweigt, aromatisch, gesättigt oder ungesättigt sein. Vorzugsweise weisen die Reste $R^6$ 1 bis 6 Kohlenstoffatome auf, besonders bevorzugt sind Alkylreste oder Alkanoylreste mit 1 bis 6 Kohlenstoffatomen. Bevorzugte Halogensubstituenten sind Fluor und Chlor. Besonders bevorzugte Substituenten $R^6$ sind Wasserstoff, der Methyl-, der Ethyl-, der Cyclohexyl-Rest und der Acetyl-Rest.

Die einwertigen Kohlenwasserstoffreste $R^9$ können halogensubstituiert, linear, zyklisch, verzweigt, aromatisch, gesättigt oder ungesättigt sein. Vorzugsweise weisen die Reste $R^9$ 1 bis 6 Kohlenstoffatome auf, besonders bevorzugt sind Alkylreste mit 1 bis 6 Kohlenstoffatomen. Bevorzugte Halogensubstituenten sind Fluor und Chlor. Besonders bevorzugte Substituenten $R^9$ sind Wasserstoff, der Methyl-, der Ethyl- und der Cyclohexyl-Rest.

Vorzugsweise weist **x** den Wert 0 oder einen Wert von 1 bis 18, besonders bevorzugt 1 bis 6 auf.

Besonders bevorzugte Reste $R^2$ sind $-CH_2N(R^6)_2$, $-(CH_2)_3N(R^6)_2$, $-(CH_2)_3N(R^6)(CH_2)_2N(R^6)_2$, insbesondere der Aminopropylrest, Aminoethylaminopropylrest und Cyclohexylaminopropylrest.

Vorzugsweise ist das Polydimethylsiloxan (P) aufgebaut aus mindestens 3, insbesondere mindestens 10 Einheiten und vorzugsweise höchstens 500 Einheiten, insbesondere höchsten 200 Einheiten der Formel Ia, Ib, IIa und IIb.

Das Polydimethylsiloxan (P) weist bevorzugt eine Kettenlänge von 3 bis 1000 Wiederholungseinheiten, insbesondere von 10 bis 500 Wiederholungseinheiten auf.

Die Viskosität des Polydimethylsiloxans (P) beträgt vorzugsweise 1 bis 100000 mPa·s, insbesondere 10 bis 10000 mPa·s bei 20°C.

Das Verhältnis von Anzahl der Einheiten Ia zur Anzahl der Einheiten Ib ist so gewählt, dass das Polydimethylsiloxan (P) mindestens eine Aminzahl von 0,1 mequiv/g Polydimethylsiloxan (P), vorzugsweise mindestens 0,15 mequiv/g Polydimethylsiloxan (P) aufweist. Die Aminzahl des Polydimethylsiloxans (P) beträgt höchstens 7 mequiv/g, vorzugsweise höchstens 2 mequiv/g, insbesondere höchstens 0,6 mequiv/g.

Das Polydimethylsiloxan (P) besitzt bevorzugt entweder ausschließlich Einheiten der Formel IIa, ausschließlich Einheiten der Formel IIb oder eine Kombination aus Einheiten der Formel IIa und IIb.

Hergestellt wird das Polydimethylsiloxan (P) durch bekannte chemische Verfahren wie z. B. Hydrolyse oder Äquilibrierung.

Das Protonierungsmittel ist vorzugsweise eine einprotonige oder mehrprotonige, wasserlösliche oder wasserunlösliche, organische oder anorganische Säure.

Geeignete Protonierungsmittel sind beispielsweise Ameisensäure, Essigsäure, Propionsäure, Malonsäure, Zitronensäure, Salzsäure, Schwefelsäure, Phosphorsäure oder Mischungen daraus. Bevorzugte Protonierungsmittel sind Ameisensäure, Essigsäure, Schwefelsäure oder Salzsäure. Besonders bevorzugt ist die Essigsäure.

Das Protonierungsmittel wird in der Regel in unverdünnter oder in Form einer wässrigen Lösung hinzugefügt.

Das Protonierungsmittel wird vorzugsweise in einer Menge von 0,05 bis 2 Mol Proton pro Mol basisches Stickstoffatom der Reste $R^2$ zugesetzt.

Das Protonierungsmittel wird bevorzugt in einer Menge zugegeben, dass die Öl-in-Wasser-Emulsionen einen pH-Wert in einem Bereich von 3,5 bis 7,0, vorzugsweise einen pH-Wert zwischen 3,5 und 6,0 und besonders bevorzugt einen pH-Wert zwischen 3,5 und 5,0 erreichen.

Im Rahmen der vorliegenden Erfindung wird der pH-Wert mit einer Elektrode entsprechend der US Pharmacopeia USP 33 bei 20°C gemessen.

Die einwertigen Kohlenwasserstoffreste $R^{10}$ der Silicatverbindung können halogensubstituiert, linear, zyklisch, verzweigt, aromatisch, gesättigt oder ungesättigt sein. Vorzugsweise weisen die Reste $R^{10}$ 1 bis 6 Kohlenstoffatome auf, besonders bevorzugt sind Alkylreste und Phenylreste. Bevorzugte Halogensubstituenten sind Fluor und Chlor. Besonders bevorzugte Reste $R^{10}$ sind Methyl, Ethyl und Propyl.

Vorzugsweise enthalten die Emulsionen bezogen auf 100 Gew.-Teile Polydimetylsiloxan (P) 5 bis 50 Gew.-Teile, besonders bevorzugt 10 bis 30 Gew.-Teile der Silicatverbindung.

Vorzugsweise enthält die Polysilicatverbindung mindestens 90, insbesondere mindestens 95 Mol-% Einheiten der allgemeinen Formeln VII und VIII.

Die restlichen Einheiten der Polysilicatverbindung können beispielsweise Einheiten der allgemeinen Formeln XII und XIII

$$R^{10}OSiO_{3/2} \qquad (XII),$$

$$SiO_{4/2} \qquad (XIII),$$

sein, wobei $R^{10}$ die vorstehenden Bedeutungen aufweist.

Die Öl-in-Wasser Emulsionen können auch noch zusätzlich Siliconöle, Siliconwachse und Siliconharze enthalten, vorzugsweise in Mengen von höchstens 5 Gew.-Teilen, insbesondere höchstens 2 Gew.-Teilen.

Das Wasser ist vollentsalztes oder salzhaltiges Wasser, bevorzugt vollentsalztes Wasser.

Die erfindungsgemäßen Öl-in-Wasser Emulsionen enthalten vorzugsweise höchstens 3, besonders bevorzugt höchstens 1, insbesondere höchstens 0,1 Gew.-Teile Emulgator.

Es können als Emulgatoren alle bisher bekannten, ionischen und nicht-ionischen Emulgatoren sowohl einzeln als auch als Mischungen verschiedener Emulgatoren eingesetzt werden, mit denen auch bisher wässrige Dispersionen, insbesondere wässrige Emulsionen von Organopolysiloxanen hergestellt werden konnten.

Beispiele für anionische Emulgatoren sind:

1. Alkylsulfate, besonders solche mit einer Kettenlänge von 8 bis 18 C-Atomen, Alkyl- und Alkarylethersulfate mit 8 bis 18 C-Atomen im hydrophoben Rest und 1 bis 40 Ethylenoxid (EO)- bzw. Propylenoxid (PO)einheiten.

2. Sulfonate, besonders Alkylsulfonate mit 8 bis 18 C-Atomen, Alkylarylsulfonate mit 8 bis 18 C-Atomen, Tauride, Ester und Halbester der Sulfobernsteinsäure mit einwertigen Alkoholen oder Alkylphenolen mit 4 bis 15 C-Atomen; gegebenenfalls können diese Alkohole oder Alkylphenole auch mit 1 bis 40 EO-Einheiten ethoxyliert sein.

3. Alkali- und Ammoniumsalze von Carbonsäuren mit 8 bis 20 C-Atomen im Alkyl-, Aryl-, Alkaryl- oder Aralkylrest.

4. Phosphorsäureteilester und deren Alkali- und Ammoniumsalze, besonders Alkyl- und Alkarylphosphate mit 8 bis 20 C-Atomen im organischen Rest, Alkylether- bzw. Alkaryletherphosphate mit 8 bis 20 C-Atomen im Alkyl- bzw. Alkarylrest und 1 bis 40 EO-Einheiten.

Beispiele für nichtionische Emulgatoren sind:

5. Polyvinylalkohol, der noch 5 bis 50%, vorzugsweise 8 bis 20 Vinylacetateinheiten aufweist, mit einem Polymerisationsgrad von 500 bis 3000.

6. Alkylpolyglycolether, vorzugsweise solche mit 3 bis 40 EO-Einheiten und Alkylresten von 8 bis 20 C-Atomen.

7. Alkylarylpolyglycolether, vorzugsweise solche mit 5 bis 40 EO-Einheiten und 8 bis 20 C-Atomen in den Alkyl- und Arylresten.

8. Ethylenoxid/Propylenoxid(EO/PO)-Blockcopolymere, vorzugsweise solche mit 8 bis 40 EO- bzw. PO-Einheiten.

9. Additionsprodukte von Alkylaminen mit Alkylresten von 8 bis 22 C-Atomen mit Ethylenoxid oder Propylenoxid.

10. Fettsäuren mit 6 bis 24 C-Atomen.

11. Alkylpolyglykoside der allgemeinen Formel R*-O-ZO, worin R* einen linearen oder verzweigten, gesättigten oder ungesättigten Alkylrest mit im Mittel 8-24 C-Atomen und ZO einen Oligoglykosidrest mit im Mittel o = 1-10 Hexose- oder Pentoseeinheiten oder Gemischen davon bedeuten.

12. Naturstoffe und deren Derivate, wie Lecithin, Lanolin, Saponine, Cellulose; Cellulosealkylether und Carboxyalkylcellulosen, deren Alkylgruppen jeweils bis zu 4 Kohlenstoffatome besitzen.

13. Polare Gruppen, enthaltend insbesondere die Elemente O, N, C, S, P, Si, enthaltende lineare Organo(poly)siloxane, insbesondere solche mit Alkoxygruppen mit bis zu 24 C-Atomen und/oder bis zu 40 EO- und/oder PO-Gruppen.

Beispiele für kationische Emulgatoren sind:

14. Salze von primären, sekundären und tertiären Fettaminen mit 8 bis 24 C-Atomen mit Essigsäure, Schwefelsäure, Salzsäure und Phosphorsäuren.

15. Quarternäre Alkyl- und Alkylbenzolammoniumsalze, insbesondere solche, deren Alkylgruppen 6 bis 24 C-Atome besitzen, insbesondere die Halogenide, Sulfate, Phosphate und Acetate.

16. Alkylpyridinium-, Alkylimidazolinium- und Alkyloxazoliniumsalze, insbesondere solche, deren Alkylkette bis zu 18 C-Atome besitzt, speziell die Halogenide, Sulfate, Phosphate und Acetate.

Als Ampholytische Emulgatoren eignen sich besonders:

17. Langkettig substituierte Aminosäuren, wie N-Alkyl-di-(aminoethyl-)glycin oder N-Alkyl-2-aminopropionsäuresalze.

18. Betaine, wie N-(3-Acylamidopropyl)-N,N-dimethylammoniumsalze mit einem C8-C18-Acylrest und Alkylimidazolium-Betaine.

Bevorzugt als Emulgatoren sind nichtionische Emulgatoren, insbesondere die vorstehend unter 6. aufgeführten Alkylpolyglycolether und kationische Emulgatoren, insbesondere die vorstehend unter 15. aufgeführten quarternären Alkyl- und Alkylbenzolammoniumsalze. Der Emulgator kann aus einem der o.g. Emulgatoren oder aus einem Gemisch zweier oder mehrerer o.g. Emulgatoren bestehen, er kann in reiner Form oder als Lösungen eines oder mehrerer Emulgatoren in Wasser oder organischen Lösungsmitteln eingesetzt werden.

Die Öl-in-Wasser Emulsionen enthalten vorzugsweise organische Lösemittel, die ausgewählt werden aus der Gruppe der Monoalkohole der allgemeinen Formel IX oder Dialkoholmonoether der allgemeinen Formel X, welche einen Siedepunkt oder Siedebereich von höchstens 260°C bei 0,10 MPa aufweisen.

Die einwertigen Kohlenwasserstoffreste $R^{11}$ können linear, zyklisch, verzweigt, aromatisch, gesättigt oder ungesättigt sein. Vorzugsweise weisen die Reste $R^{11}$ 2 bis 12 Kohlenstoffatome auf, besonders bevorzugt sind Alkylreste und Phenylreste.

Beispiele für einwertige Kohlenwasserstoffreste $R^{11}$ sind Alkylgruppen wie die Ethyl-, n-Propyl-, i-Propyl-, n-Butyl-, i-Butyl-, n-Hexyl-, n-Heptyl, n-Octyl-, i-Octyl-, 2-Ethylhexyl-, n-Nonyl, n-Decyl-, n-Undecyl-, Phenyl, 2-Butyloctyl- und die n-Dodecylgruppe.

Die einwertigen Kohlenwasserstoffreste $R^{12}$ können linear, zyklisch, verzweigt, aromatisch, gesättigt oder ungesättigt sein. Vorzugsweise weisen die Reste $R^{12}$ 1 bis 12 Kohlenstoffatome auf, besonders bevorzugt sind Alkylreste und Phenylreste.

Beispiele für einwertige Kohlenwasserstoffreste $R^{12}$ sind Alkylgruppen wie die Methyl-, Ethyl-, n-Propyl-, i-Propyl-, n-Butyl-, i-Butyl-, n-Hexyl-, n-Heptyl, n-Octyl-, 2-Ethylhexyl-, n-Nonyl, n-Decyl-, n-Undecyl-, Phenyl, 2-Butyloctyl- und die n-Dodecylgruppe.

Die zweiwertigen Kohlenwasserstoffreste $R^{13}$ können linear, zyklisch, verzweigt, gesättigt oder ungesättigt sein. Vorzugsweise weisen die Reste $R^{13}$ 2 bis 6 Kohlenstoffatome auf, besonders bevorzugt sind Alkylenreste, insbesondere der 1,2-Ethylen-Rest, der 1,3-Propylen-Rest, der 1,2-Propylen-Rest, der 1,2-Butylen-Rest, der 1,3-Butylen-Rest und der 1,4-Butylen-Rest.

Im Falle, dass $R^{14}$ ein einwertiger Kohlenwasserstoffrest bedeutet, so kann dieser linear, zyklisch, verzweigt, aromatisch, gesättigt oder ungesättigt sein. $R^{14}$ ist bevorzugt Wasserstoff, ein Alkylrest, insbesondere der Methyl- oder der Ethyl-Rest, ein Phenylrest oder eine Acetylgruppe. Besonders bevorzugt ist $R^{14}$ Wasserstoff.

Beispiele für Monoalkohole der allgemeinen Formel IX sind Ethanol, n-Propanol, Isopropanol, Butanol, Pentanol, Hexanol, Heptanol oder n-Octanol oder Guerbetalkohole, wie 2-Ethylhexanol, 2-Butyloctanol oder 2-Hexyldecanol.

Bevorzugte Beispiele für Monoalkohole der allgemeinen Formel IX sind n-Hexanol, n-Heptanol, n-Octanol sowie 2-Ethylhexanol.

Beispiele für Dialkoholmonoether und deren Derivate der allgemeinen Formel X sind Monoethylenglykolmonoalkylether, beispielsweise Ethylenglykolmonomethylether, Ethylenglykolmonoethylether, Ethylenglykolmonopropylether, Ethylenglykolmono-n-butylether, Ethylenglykolmonobutyletheracetat, Ethylenglykolmonophenylether, Ethylenglykolmonohexylether. Beispiele für Dialkoholmonoether und deren Derivate der allgemeinen Formel X sind Monopropylenglykolmonoalkylether, beispielsweise Propylenglykolmonomethylether, Propylenglykolmonomethyletheracetat, Proylenglykolmonopropylether, Proylenglykolmonobutylether oder Proylenglykolmonophenylether.

Die Öl-in-Wasser Emulsionen enthalten vorzugsweise mindestens 10 Gew.-Teile, besonders bevorzugt mindestens 20 Gew.-Teile, insbesondere mindestens 30 Gew.-Teile sowie höchstens 150 Gew.-Teile, vorzugsweise höchstens 100 Gew.-Teile organisches Lösemittel, ausgewählt aus der Gruppe der Monoalkohole der allgemeinen Formel IX oder Dialkoholmonoether der allgemeinen Formel X.

Die Öl-in-Wasser Emulsionen können ein organisches Lösemittel oder eine Kombination aus mehreren organischen Lösemitteln enthalten. Insbesondere enthalten die Öl-in-Wasser Emulsionen ein einziges organisches Lösemittel.

Die Öl-in-Wasser-Emulsionen können noch weitere Stoffe, wie Konservierungsmittel, Duftstoffe, Rostschutzmittel und Farbstoffe enthalten.

Vorzugsweise enthalten die Öl-in-Wasser-Emulsionen höchstens 8 Gew.-Teile, besonders bevorzugt höchstens 5 Gew.-Teile, ganz besonders bevorzugt höchstens 2 Gew.-Teile, insbesondere höchstens 1 Gew.-Teil eines Di-, Tri- oder Oligogycolethers der allgemeinen Formel XI.

Beispiele für Konservierungsmittel sind Alkohole, Phenoxyethanol, quaternäre Ammoniumverbindungen, beispielsweise N-Alkyl(C12-18)-N,N-dimethyl-N-benzylammoniumchlorid, Formaldehyd, Parabene, Benzylalkohol, Propionsäure und deren Salze sowie Isothiazolinone.

Die Öl-in-Wasser-Emulsionen können außerdem noch andere Additive enthalten, wie nicht-siliciumhaltige Öle, Harze und Wachse. Beispiele dafür sind Rapsöl, Olivenöl, Mineralöl, Paraffinöl oder nicht siliciumhaltige Wachse, wie z. B. Carnaubawachs und Candellilawachs oder Montansäure- und Montanesterwachse, anoxidierte synthetische Paraffine, Polyethylenwachse, Polyvinyletherwachse und metallseifenhaltige Wachse, wobei Carnaubawachs, Paraffinwachse und Polyethylenwachse bevorzugt und Paraffinwachse besonders bevorzugt sind.

Die Öl-in-Wasser-Emulsionen enthalten vorzugsweise höchstens 30,0 Gew.-Teile, insbesondere höchstens 10 Gew.-Teile, vorzugsweise mindestens 0,1 Gew.-Teile an solchen Additiven, jeweils bezogen auf 100 Gew.-Teile Polyorganosiloxan (P).

Die Öl-in-Wasser-Emulsionen werden durch Vermischen der Kombination aus Polyorganosiloxan (P), Protonierungsmittel, Silicatverbindung, Wasser und organischem Lösemittel und gegebenenfalls mit weiteren Komponenten hergestellt. Das Vermischen wird bei einer Temperatur von vorzugsweise 10-80 °C, besonders bevorzugt 15-40 °C, und einem Druck von vorzugsweise 900 bis 1100 hPa durchgeführt. Das Vermischen kann jedoch auch bei höheren oder niedrigeren Drücken durchgeführt werden.

In einer favorisierten Vorgehensweise werden das Polyorganosiloxan (P) und die Silicatverbindung vorgemischt. Diese Vormischung wird sodann in eine Mischung aus Wasser Protonierungsmittel, organischem Lösemittel und gegebenenfalls weiteren Komponenten eingearbeitet und anschließend mit weiterem Wasser zur Öl-in-Wasser-Emulsion verdünnt.

Die Herstellung kann diskontinuierlich oder kontinuierlich erfolgen.

Technologien zur Herstellung von Emulsionen von Organopolysiloxanen sind bekannt. So kann das intensive Mischen und Dispergieren in Rotor-Stator-Rührvorrichtungen, Kolloidmühlen, Hochdruckhomogenisatoren, Mikrokanälen, Membranen, Strahldüsen und ähnlichem, oder mittels Ultraschall erfolgen. Homogenisiergeräte und Verfahren sind z.B. in Ullmann's Encyclopedia of Industrial Chemistry, CD-ROM-Ausgabe 2003, Wiley-VCH Verlag, unter dem Stichwort "Emulsions" beschrieben.

Die Öl-in-Wasser-Emulsionen sind mit Wasser in allen Verhältnissen verdünnbar. Die Emulsionen können Wasser in Mengen von vorzugsweise mindestens 10,0 Gew.-Teilen, insbesondere mindestens 100,0 Gew.-Teilen, vorzugsweise höchstens 5000 Gew.-Teilen, insbesondere höchstens 1000 Gew.-Teilen enthalten.

Die Öl-in-Wasser-Emulsionen sind unabhängig vom Wasseranteil klare bis opake Flüssigkeiten mit einer Viskosität bei 25 °C von vorzugsweise 5 bis 10000 $mm^2$/s, besonders bevorzugt 5 bis 1000 $mm^2$/s, insbesondere 10 bis 500 $mm^2$/s.

Ein weiterer Gegenstand der Erfindung ist ein Verfahren zur Behandlung von Substraten mit den Öl-in-Wasser-Emulsionen. Bevorzugt ist die Behandlung und insbesondere Wasser- und Schmutz-abweisende Imprägnierung wie auch die Glanzverbesserung von porösen oder nicht porösen, saugfähigen oder nicht saugfähigen Substraten, bevorzugt von Zellulosen, Papier, natürlichen und/oder synthetischen Textilfasern, mineralischen Baumaterialien, Stein, Fliesen, Marmor, Metallen, lackierten Metallen, Glas, Keramiken, Glaskeramik, Kunststoffen, lackierten Kunststoffen, Holz, Laminat, Kork, Gummi, Lederimitat, Leder und kosmetische Anwendungen, wie z. B. Haut und Haar.

Besonders bevorzugt ist die Behandlung und Imprägnierung von beliebigen Fasern, insbesondere natürlichen und synthetischen Textilien und Funktionsmaterialien.

Die Öl-in-Wasser-Emulsionen eignen sich hervorragend zur Imprägnierung der Fasern in einer handelsüblichen Waschmaschine durch Zusatz in der Weichspülkammer. Dabei wird in einem Waschgang die Wäsche gereinigt und im Weichspülgang mit der Öl-in-Wasser-Emulsion in Kontakt gebracht. Ein zeitaufwändiger zweiter Behandlungsschritt in der Waschmaschine oder ein nachträgliches Behandeln der Textilien mittels Spray zur Imprägnierung ist nicht mehr nötig.

Des Weiteren können die Öl-in-Wasser-Emulsionen nicht nur dazu verwendet werden, Textilien oder allgemein poröse oder nicht poröse, saugfähige oder nicht saugfähige Substrate wasserfest auszurüsten und deren Glanz zu verbessern. Sondern die Öl-in-Wasser-Emulsionen (teilweise in Kombination mit weiteren Additiven) können auch noch andere Effekte erzielen, wie Beständigkeit gegenüber Umwelteinflüssen, wie z.B. Hitze, Sonnenlicht, insbesondere UV-Strahlung, Oxidationsmitteln, saurer Umgebung, oder insbesondere bei Textilien Ausrüstungseffekte, wie z. B. Farbschutz, Faserbeständigkeit, Knitterfreiheit, Schmutzabweisung, Einlaufschutz, Flammschutz, Mottenschutz, Antifilzausrüstung oder antimikrobielle Ausrüstung.

Alle vorstehenden Symbole der vorstehenden Formeln weisen ihre Bedeutungen jeweils unabhängig voneinander auf. In allen Formeln ist das Siliciumatom vierwertig. Die Mengenangaben in Gew.-Teilen beziehen sich auf 100 Gew.-Teile Polydimethylsiloxan (P).

In den folgenden Beispielen sind, falls jeweils nicht anders angegeben, alle Mengen- und Prozentangaben auf das Gewicht bezogen, alle Drücke 0,10 MPa (abs.) und alle Temperaturen 20°C.

Die Summe aller Bestandteile der Siliconmischung ergeben 100 Gew.-%.

Sofern nicht anders angegeben, werden die folgenden Beispiele bei einem Druck der umgebenden Atmosphäre, also bei etwa 1000 hPa, und bei Raumtemperatur, also etwa 20°C bzw. einer Temperatur, die sich beim Zusammengeben der Reaktanten bei Raumtemperatur ohne zusätzliche Heizung oder Kühlung einstellt, durchgeführt.

Dynamische Viskositäten werden an einem Rheometer "MCR 302" der Fa. Anton Paar nach DIN EN ISO 3219: 1994 und DIN 53019 gemessen, wobei ein Kegel-Platte-System (Kegel CP50-2) mit einem Öffnungswinkel von 2° verwendet wird. Die Kalibrierung des Gerätes erfolgt mit Normalöl 10000 der Physikalisch-Technischen Bundesanstalt. Die Messtemperatur beträgt 25,00°C +/- 0,05°C, die Messzeit 3 min. Die Viskositätsangabe (angegeben in mPas) stellt den arithmetischen Mittelwert von drei unabhängig durchgeführten Einzelmessungen dar. Die Messunsicherheit der dynamischen Viskosität beträgt 1,5 %. Der Schergeschwindigkeitsgradient wird in Abhängigkeit von der Viskosität gewählt und wird für jede Viskositätsangabe separat ausgewiesen.

Kinematische Viskositäten werden mittels eines Viskositäts-Messsystem ViscoSystem® AVS 350 der Fa. Schott unter Verwendung von Ubbelohde Viskosimeterrohren mit Konstante (z.B. der Fa. Windaus oder Fa. VWR) nach DIN 51562-Teil 1 oder ISO/DIS 3105 (einschließlich deren Kalibrierung) bestimmt. Die Messungen erfolgen bei einer Temperatur von 25,0 °C (+- 0,1 °C). Die Viskositätsangabe (angegeben in mm2/s) stellt den arithmetischen Mittelwert von drei unabhängig durchgeführten Einzelmessungen dar: Die Messunsicherheit der kinematischen Viskosität beträgt 1,05 %. Abhängig vom Messbereich werden unterschiedliche Viskosimeterrohre mit entsprechenden Richtkonstanten verwendet:

| Messbereich | Kapillar-Nr. | Richtkonstante |
|---|---|---|
| 0,5 - 3 mm$^2$/s | 0c | 0,003 K |
| 0,8 - 5 mm$^2$/s | 0a | 0,005 K |
| 1,2 - 10 mm$^2$/s | I | 0,01 K |
| 3 - 30 mm$^2$/s | Ic | 0,03 K |
| 10 - 100 mm$^2$/s | II | 0,10 K |
| 30 - 300 mm$^2$/s | IIc | 0,30 K |
| 100 - 1000 mm$^2$/s | III | 1 K |
| 300 - 3000 mm$^2$/s | IIIc | 3 K |
| 1000 - 10000 mm$^2$/s | IV | 10 K |

Angabe des Messbereichs, der entsprechenden Kapillar-Nr. sowie der Konstante nach VWR-Laborkatalog, 2011-2013, S. 645.8.

$^1$H-NMR-Spektren werden als Lösung in $CDCl_3$ an einem Bruker Avance III HD-NMR-Spektrometer (5 mm Breitbandprobenkopf mit ATMA und Z-Gradient) mit einer Messfrequenz von 500,13 MHz aufgenommen.

$^{29}$Si-NMR-Spektren werden als Lösung in $C_6D_6$-Toluol an einem Bruker Avance III HD-NMR-Spektrometer (5 mm Breitbandprobenkopf mit ATMA und Z-Gradient) mit einer Messfrequenz von 90,34 MHz aufgenommen.

Die Auswertung erfolgt wie dem Fachmann bekannt und in folgender Literatur beschrieben: "Über die 1H-, 13C- und 29Si-NMR chemischen Verschiebungen einiger linearer, verzweigter und cyclischer Methyl-Siloxan-Verbindungen", G. Engelhardt, H. Jancke; J. Organometal. Chem. 28 (1971), 293-300; "Chapter 8 - NMR spectroscopy of organosilicon compounds", Elizabeth A. Williams, The Chemistry of Organic Silicon Compounds, 1989 John Wiley and Sons Ltd, 511-533.

Die Aminzahl gibt an, wieviel mmol KOH einem Gramm der zu bestimmenden Substanz äquivalent sind. Die Bestimmung der Aminzahl erfolgt nach DIN 16945-Version 1989-03.

**Beispiele:**

Um den Vorteil der Öl-in-Wasser Emulsionen mit Polysilicatverbindungen unter Verwendung der organischen Lösemittel aufzuzeigen, wird diese im Vergleich zu einer Formulierung mit Polysilicatverbindungen bzw. einer Formulierung mit MQ-Methylsiliconharz unter Verwendung des organischen Lösemittels Diethylenglycolbutylether (als Stand der Technik) getestet.

Das in den Testbeispielen verwendete Aminoalkylgruppen aufweisende Polydimethylsiloxan (P-1) ist ein gemischt Hydroxy-/Methoxydimethylsilyl-terminiertes Copolymer aus Aminoethylaminopropylmethylsiloxan- und Dimethylsiloxan-Einheiten mit einer Viskosität von 982 mPas (bei 25°C und bei einer Scherrate von 10 1/s) und eine Aminzahl von 0,287 mmol/g.

Das in den Testbeispielen verwendete Aminoalkylgruppen aufweisende Polydimethylsiloxan (P-2) ist ein gemischt Hydroxy-/Methoxydimethylsilyl-Trimethylsilyl-terminiertes Copolymer (68 mol% SiMe$_3$-Endgruppe, 29 mol% SiMe$_2$OH-Endgruppe, 3 mol% SiMe$_2$OMe-Endgruppe, bestimmt mit $^{29}$Si-NMR) aus Aminoethylaminopropylsiloxan- und Dimethylsiloxan-Einheiten mit einer Viskosität von 69 mm$^2$/s (gemessen bei 25°C mit Kapillar-Nr. II) und einer Aminzahl von 0,12 mmol/g.

Die in den Testbeispielen verwendete Silicatverbindung (S-1) ist ein Gemisch aus Tetraethoxysilicat der allgemeinen Formel VI und einer Polysilicatverbindung mit 2 Einheiten der allgemeinen Formel VII und 1 bis 7 Einheiten der allgemeinen Formel VIII, wobei R$^{10}$ einen Ethylrest bedeutet, mit einem SiO$_2$-Gehalt von 40 Gew.-%.

Herstellen der verschiedenen Formulierungen:

**Erfindungsgemäße Formulierung E-1:**

95,0 g des Aminoalkylgruppen aufweisenden Polydimethylsiloxans (P-1) und 5,0 g der Silicatverbindung (S-1) werden bei Raumtemperatur zu einer farblosen, klaren Ölmischung (M-1) vermischt.

7,0 g entmineralisiertes Wasser, 12,0 g n-Butylglykol (erhältlich unter dem Handelsnamen Ethylene glycol butyl ether bei der Fa. Sigma-Aldrich) und 0,9 g Essigsäure (80%ige wässrige Lösung erhältlich bei der Fa. Brenntag) werden bei Raumtemperatur vorgelegt und vermischt. 17,0 g der Ölmischung (M-1) sowie 63,1 g entmineralisiertes Wasser werden mit Hilfe eines Propellerrührers bei Raumtemperatur sukzessive eingerührt. Erhalten wird eine transluzente, farblose Emulsion (E-1). Die Emulsion ist auch nach 6-monatiger Lagerung bei Raumtemperatur sowie bei 40°C homogen und stabil.

Vergleichsbeispiel Formulierung VE-2, nicht erfindungsgemäß analog DE 10 2014 216 380:
7,0 g entmineralisiertes Wasser, 2,9 g Ethylenglykolmonohexylether (käuflich erhältlich bei der Fa. BASF), 6,0 g Diethylenglykolmonobutylether (käuflich erhältlich bei der Fa. BASF) und 0,4 g Essigsäure (80%ige wässrige Lösung erhältlich bei der Fa. Brenntag) werden bei Raumtemperatur vorgelegt und vermischt. 17,0 g der Ölmischung (M-1), 64,1 g entmineralisiertes Wasser, 0,5 g Essigsäure sowie 2,1 g Diethylenglykolmonobutylether werden mit Hilfe eines Propellerrührers bei Raumtemperatur sukzessive eingerührt. Erhalten wird eine klare, farblose Emulsion (VE-2).

Vergleichsbeispiel Formulierung VE-3, nicht erfindungsgemäß analog DE 10 2014 216 380:
7,0 g entmineralisiertes Wasser, 9,0 g n-Butylglykol (erhältlich unter dem Handelsnamen Ethylene glycol butyl ether bei der Fa. Sigma-Aldrich), 3,0 g Diethylenglykolmonobutylether (käuflich erhältlich bei der Fa. BASF) und 0,3 g Essigsäure (80%ige wässrige Lösung erhältlich bei der Fa. Brenntag) werden bei Raumtemperatur vorgelegt und vermischt. 17,0 g der Ölmischung (M-1), 63,5 g entmineralisiertes Wasser und 0,2 g Essigsäure werden mit Hilfe eines Propellerrührers bei Raumtemperatur sukzessive eingerührt. Erhalten wird eine klare, farblose Emulsion (VE-3).

**Erfindungsgemäße Formulierung E-4:**

80,0 g des Aminoalkylgruppen aufweisenden Polydimethylsiloxans (P-2) und 20,0 g der Silicatverbindung (S-1) werden bei Raumtemperatur zu einer farblosen, klaren Ölmischung (M-2) vermischt.

7,0 g entmineralisiertes Wasser, 12,0 g n-Butylglykol (erhältlich unter dem Handelsnamen Ethylene glycol butyl ether bei der Fa. Sigma-Aldrich) und 0,3 g Essigsäure (80%ige wässrige Lösung erhältlich bei der Fa. Brenntag) werden bei Raumtemperatur vorgelegt und vermischt. 25,0 g der Ölmischung (M-2) sowie 55,7 g entmineralisiertes Wasser werden mit Hilfe eines Propellerrührers bei Raumtemperatur sukzessive eingerührt. Erhalten wird eine transluzente, weißliche Emulsion (E-4). Die Emulsion ist auch nach 6-monatiger Lagerung bei Raumtemperatur sowie bei 40°C homogen und stabil.

**Erfindungsgemäße Formulierung E-5:**

10,0 g entmineralisiertes Wasser, 17,0 g n-Butylglykol (erhältlich unter dem Handelsnamen Ethylene glycol butyl ether bei der Fa. Sigma-Aldrich) und 0,4 g Essigsäure (80%ige wässrige Lösung erhältlich bei der Fa. Brenntag) werden bei Raumtemperatur vorgelegt und vermischt. 35,0 g der Ölmischung (M-2) sowie 37,6 g entmineralisiertes Wasser werden mit Hilfe eines Propellerrührers bei Raumtemperatur sukzessive eingerührt. Erhalten wird eine leicht trübe, weißliche Emulsion (E-5). Die Emulsion ist auch nach 6-monatiger Lagerung bei Raumtemperatur sowie bei 40°C homogen und stabil.

**Anwendungsbeispiele:**

**Anwendungsbeispiel 1: Wasserabweisungstest (Wasser / Alkohol - Tropfentest)**

Diese Testmethode dient dazu, die hydrophobe Ausrüstung von Leder oder Textilien zu bestimmen.

Zum Zwecke der Imprägnierung von Leder oder von Textilien werden die Emulsionen (E-1) und (VE-2) auf einen Wirkstoffanteil von 5 % mit entionisiertem Wasser verdünnt.

Das behandelte, zu prüfende Muster (Leder oder Textilie) wird über eine Petrischale gelegt, so dass im Testbereich des Prüfmusters kein Kontakt mit dem Boden besteht.

Beginnend mit der Testflüssigkeit W (dest. Wasser) setzt man vorsichtig 40 µl große Tropfen an jeweils drei Stellen des Prüfmusters auf. Diese Stellen sollen mindestens 2 cm voneinander entfernt sein. Das Prüfmuster darf beim Aufsetzen der Testflüssigkeiten nicht mit der Pipette berührt werden. Um ein zu starkes Verdunsten während des Testes zu vermeiden, wird das Prüfmuster mit einer Petrischale abgedeckt. Aus einem Winkel von ca. 45° beobachten, bis der Tropfen komplett eingezogen ist. Dies ist die Rewettingzeit. Falls der Tropfen nach 5 Stunden immer noch auf dem Prüfmuster steht, wird der Test beendet und als Zeit > 300 min angegeben (bei Textilien). Im Falle, dass es sich bei dem zu prüfenden Muster um Leder handelt, wird die Zeit in Sekunden (sek) angegeben. Anschließend wird der Test mit der nächsten Testflüssigkeit durchgeführt.

Tabelle 1, Zusammensetzung der Testflüssigkeit:

| Standard - Testflüssigkeiten | | Prozentuale Zusammensetzung | |
|---|---|---|---|
| | | Isopropanol | dest. Wasser |
| Wasser | 0 / 100 | 0 | 100 |
| 1 | 10 / 90 | 10 | 90 |
| 2 | 20 / 80 | 20 | 80 |
| 3 | 30 / 70 | 30 | 70 |

Auswertung:

Als Ergebnis für die hydrophob ausgerüsteten Leder oder Textilien wird die Rewettingzeit angeben. Je höher die Zeit, desto hydrophober ist die Ausrüstung.

Tabelle 2, Testergebnis bzgl. der Imprägnierung von Baumwolle:

| | Formulierung (E-1) | Formulierung VE-2* | Formulierung VE-3* | Formulierung E-4 |
|---|---|---|---|---|
| | | (Vergleichs -beispiel) | (Vergleichs -beispiel) | |
| Rewetting-test: | | | | |
| - Wasser | > 300 min | > 300 min | > 300 min | > 300 min |
| - Wasser/Iso = 90/10 | > 300 min | 20 min | > 300 min | 240 min |
| - Wasser/Iso = 80/20 | 70 min | 4 min | 5 min | 70 min |
| *nicht erfindungsgemäß | | | | |

Überraschend zeigt sich, dass die erfindungsgemäßen Formulierungen (E-1) und (E-4) der nicht erfindungsgemäßen Formulierung (VE-2), die Diethylenglykolbutylether enthält, deutlich überlegen sind.

Selbst die Formulierung (VE-3), die nur 18,6 Gew.-Teile Diethylenglykolbutylether bezogen auf 100 Gew.-Teile des Polydimethylsiloxans (P-1)enthält, zeigt im Rewetting-Test mit Wasser/Isopropanol 80/20 eine deutlich kürzerer Rewetting-Zeit verglichen mit den erfindungsgemäßen Formulierungen (E-1) und (E-4) .

Tabelle 3, Testergebnis bzgl. der Imprägnierung von hellem Futterleder:

| | Unbehandelt* | Formulierung (E-1) |
|---|---|---|
| Rewettingtest: | | |
| - Wasser | 3 sek | > 15 sek |
| - Wasser/Iso = 90/10 | 0 sek | > 15 sek |
| - Wasser/Iso = 80/20 | 0 sek | 10 sek |
| *nicht erfindungsgemäß | | |

Die erfindungsgemäße Formulierung (E-1) weist auch eine exzellente der Imprägnierung von Futterleder auf.

**Anwendungsbeispiel 2:**

**Bestimmung der wasserabweisenden Eigenschaften (Sprühverfahren)**

Die analog zu Anwendungsbeispiel 1 behandelte Baumwolle wird über eine Petrischale gespannt.
Aus einer Höhe von 150 mm werden mit Hilfe einer Düse 250 ml entmineralisiertes Wasser kontinuierlich auf das Testgewebe gesprüht. Sofort nach Beendigung des Besprühens wird das Testgewebe kräftig abgeschüttelt und anschließend das Aussehen der Oberfläche nach dem unten aufgeführten Beurteilungsmaßstab bewertet.
Auswertung:

Beurteilungsmaßstab nach Vorlage:

100 Kein Anhaften oder Benetzen der Oberfläche
90 Geringes, zufälliges verteiltes Anhaften oder

Benetzen der Oberfläche

80 Benetzen der Oberfläche an den Sprühpunkten
70 Teilweises Benetzen der gesamten Oberfläche
50 Vollständiges Benetzen der gesamten Oberfläche

Tabelle 4, Testergebnis bzgl. der Imprägnierung von Baumwolle:

|  | Formulierung (E-1) | Formulierung VE-2* | Formulierung E-4 |
|---|---|---|---|
|  |  | (Vergleichsbeispiel) |  |
| Sprühverfahren: | 85 | 70 | 90 |
| *nicht erfindungsgemäß | | | |

Überraschend zeigt sich, dass die erfindungsgemäßen Formulierungen (E-1) und (E-4) der nicht erfindungsgemäßen Formulierung (VE-2), die Diethylenglykolbutylether enthält, deutlich überlegen sind.

**Anwendungsbeispiel 3:**

**Bestimmung der wasserabweisenden Eigenschaften in der Waschmaschine**

Zur Imprägnierung in der Waschmaschine werden folgende Gewebe verwendet:

Material Polyester: wfk 30A, 100% Polyester, Breite: 100 cm,
Artikel-Nr. 30000, Stoffgewicht ca. 170 g/m$^2$ von der Fa. wfk Testgewebe GmbH
Material Polyamid: wfk 40A, 100% Polyamid 6.6, Breite: 80 cm, Artikel-Nr. 40000, Stoffgewicht ca. 75 g/m$^2$ von der Fa. wfk Testgewebe GmbH

Jeweils 600 g der zu testenden Gewebe werden in die Trommel einer Waschmaschine (Novotronic® W 941, Fa. Miele) gegeben. In die Weichspülkammer werden 100 g der zu testenden Formulierung gegeben. Anschließend wird ein Hauptwaschgang bei 40°C mit Schleudern (1200 U/min) gestartet. Nach Beendigung des Waschprogrammes werden die Gewebe aus der Waschmaschine entnommen, auf der Leine getrocknet und anschließend über Nacht in einem klimatisierten Raum bei 23°C und 60% relativer Luftfeuchte klimatisiert.
Die Testung der Imprägnierwirkung erfolgt durch Bestimmung der Eindringzeit eines angefärbten Wassertropfens in das Gewebe. Die Tropfenapplikation, die eingesetzten Testflüssigkeiten sowie die Auswertung erfolgen wie in Anwendungsbeispiel 1 für Textilien beschrieben.

Tabelle 5, Testergebnis bzgl. der Imprägnierung von Polyester:

| | Formulierung (E-1) | Formulierung (E-5) |
|---|---|---|
| Rewettingtest: | | |
| - Wasser | > 300 min | > 300 min |
| - Wasser/Iso = 90/10 | > 300 min | > 300 min |
| - Wasser/Iso = 80/20 | > 300 min | > 300 min |

Tabelle 6, Testergebnis bzgl. der Imprägnierung von Polyamid:

| | Formulierung (E-1) | Formulierung VE-2* | Formulierung (E-5) |
|---|---|---|---|
| | | (Vergleichsbeispiel) | |
| Rewettingtest: | | | |
| - Wasser | > 300 min | > 300 min | > 300 min |
| - Wasser/Iso = 90/10 | > 300 min | > 300 min | > 300 min |
| - Wasser/Iso = 80/20 | > 300 min | > 300 min | > 300 min |
| - Wasser/Iso = 70/30 | > 300 min | 250 min | > 300 min |
| *nicht erfindungsgemäß | | | |

Überraschend zeigt sich, dass die erfindungsgemäßen Formulierungen (E-1) und (E-5) eine ausgezeichnete Imprägnierwirkung aufweisen und der nicht erfindungsgemäßen Formulierungen (VE-2), die Diethylenglykolbutylether enthält, deutlich überlegen sind.

**Anwendungsbeispiel 4:**

**Bestimmung der wasserabweisenden Eigenschaften bei porösen Substraten**

Bestimmung der Wasserabweisung auf Holz durch Gewichtszunahme

Als Testmaterial werden Holzwürfel mit einer Kantenlänge von 3 cm aus Buche und Fichte verwendet.

Die Holzwürfel werden mit einer Stirnseite in die ca. 1 cm tiefen Testlösungen 5 s lang eingetaucht und anschließend mit einem Tuch abgetupft.

Nach der Trocknung bei Raumtemperatur (3 Tage) werden die Würfel mittels einer Analysenwaage (Typ AE 200, Fa. Mettler-Toledo GmbH, Deutschland) gewogen (g1). Anschließend werden die Würfel mit der behandelten Seite für eine Stunde in ca. 0,5 cm tiefes Wasser gestellt, herausgenommen, mit einem Tuch abgetupft und das Gewicht bestimmt (g2).

$$\text{Gewichtszunahme in [\%]:} \quad \Delta g = (g2 - g1) / g1 \times 100$$

Je geringer die Gewichtszunahme ausfällt, desto besser ist die Imprägnierwirkung.

Zum Zwecke der Imprägnierung der Holzwürfel wird die Emulsion (E-1) mit entionisiertem Wasser auf einen Wirkstoffanteil von 5 % verdünnt.

Tabelle 7, Testergebnis bzgl. der Imprägnierung auf Buche und Fichte:

| | unbehandelt | Formulierung (E-1) |
|---|---|---|
| Gewichtszunahme $\Delta g$ | | |
| - Buche | 55% | 5% |
| - Fichte | 8% | 2% |

Die erfindungsgemäße Formulierung (E-1) zeigt eine ausgezeichnete Imprägnierwirkung bei dem porösen Substrat Holz.

Eigenschaften auf Marmor:

Behandlung des Marmors (Jura Kalkstein gelb, einseitig poliert, 5x5x1 cm, Fa. Herbst Burghausen):

Zum Zwecke der Imprägnierung von Marmor wird die Emulsion (E-1) mit entionisiertem Wasser auf einen Wirkstoffanteil von 2 % bzw. 5 % verdünnt.

Die 2 %ige bzw. 5 %ige Testlösung werden ca. 0,2 - 0,5 cm hoch in eine Schale gefüllt. Die Marmorplatten werden mit der polierten Seite für ca. 1 - 5 s in die Lösung gelegt, dann herausgenommen und die polierte Seite leicht mit einem Kosmetiktuch abgewischt, so dass keine Tröpfchen auf der Oberfläche mehr sichtbar sind. Die Marmorplatten werden bei RT (20 °C) trocknen gelassen. Nach drei Tagen wird die Hydrophobie des Marmors mittels Kontaktwinkelmessung eines Wassertropfens, die Schmutzabweisung mittels Sojaöl und Tinte und die Glanzveränderung mittels Glanzmessgerätes bestimmt.

Bestimmung der Wasserabweisung:

Die Wasserbeständigkeit des behandelten Marmors wird durch Messung des Kontaktwinkels eines Wassertropfens mittels eines Kontaktwinkelmessgerätes (Rame-hart Inc., USA) auf der Oberfläche des unbehandelten und behandelten Marmors bestimmt. Die Tropfengröße des verwendeten entmineralisierten Wassers beträgt 0,01 ml.

Tabelle 8, Testergebnis bzgl. der Wasserabweisung auf Marmorplatten:

|  | Kontaktwinkel |
| --- | --- |
| Unbehandelt | 36° |
| - 2 %ige Lösung Formulierung (E-1) | 92° |
| - 5 %ige Lösung Formulierung (E-1) | 95° |

Die erfindungsgemäße Formulierung (E-1) zeigt eine ausgezeichnete wasserabweisende Wirkung auf dem porösen Substrat Marmor, was sich durch den deutlich erhöhten Kontaktwinkel gegenüber der unbehandelten Marmorplatte ausdrückt.

Bestimmung der Schmutzabweisung:

Auf die Oberfläche des unbehandelten und behandelten Marmors werden 0,4 ml große Tropfen von Sojaöl (Rapunzel Sojaöl nativ, käuflich erhältlich bei Amazon) und einer blauen Tinte (Pelikan 4001 Tintenpatronen für Füller, käuflich erhältlich bei Amazon) gesetzt. Nach 5 min mit einem Tuch abgewischt und das Aussehen der verbleibenden Flecken visuell beurteilt.

Tabelle 9, visuelle Beurteilung der schmutzabweisenden Wirkung auf Marmorplatten:

| Sichtbarkeit des Fleckes | | |
| --- | --- | --- |
| Stark sichtbar | --- | |
| Mäßig sichtbar | -- | |
| Schwach sichtbar | - | |
| Nicht mehr sichtbar | o | |
|  | Sojaöl | Blaue Tinte |
| Unbehandelt | - | - |
| - 2 %ige Lösung Formulierung (E-1) (52W18 B; HC 621) | O | - |
| - 5 %ige Lösung Formulierung (E-1) (52W18 B; HC 621) | O | - |

Die erfindungsgemäße Formulierung (E-1) zeigt eine ausgezeichnete schmutzabweisende Wirkung auf dem porösen Substrat Marmor insbesondere gegenüber der unbehandelten Marmorplatte.

Bestimmung der Glanzveränderung:

Der Glanz wird mittels eines Glanzmessgerätes (micro-tri-gloss, Fa. Byk Gardner) bei einem Einstrahlwinkel von 20 ° auf der unbehandelten und behandelten Oberfläche des Marmors bestimmt. Die Differenz der Glanzwerte zwischen unbehandelten und behandelten Marmor ist die in der Tabelle angegebene Glanzveränderung.

Tabelle 10, Glanzänderung auf Marmorplatten:

| Änderung des Glanzwertes gegenüber einer unbehandelten Marmorplatte | |
|---|---|
| - 2 %ige Lösung Formulierung (E-1) | 8 GU |
| - 5 %ige Lösung Formulierung (E-1) | 16 GU |

Das poröse Substrat Marmor erfährt durch Behandlung mit der erfindungsgemäßen Formulierung (E-1) eine überraschend deutliche Glanzsteigerung.

**Anwendungsbeispiel 5:**

**Bestimmung der Eigenschaften bei glatten Substraten**

Zum Zwecke der Imprägnierung von glatten Substraten wird eine schwarze, matte Kunststoffplatte (Material: ABS, Narbung 3, 150 x 100 x 3 mm, käuflich erhältlich bei Fa. Merck & Partner GmbH, Ulm) verwendet.
0,5 ml der Emulsion (E-4) wird auf die Kunststoffplatte gegeben und mit einem Kosmetiktuch einpoliert. Die Platte wird bei RT (20 °C) für 24 h liegen gelassen. Die Glanzveränderung wird mittels eines Glanzmessgerätes bestimmt und die Wasserfestigkeit durch kurzes Abspülen mit Trinkwasser (ca. 10 sec.) getestet.

Bestimmung der Glanzveränderung:

Der Glanz wird mittels eines Glanzmessgerätes (micro-tri-gloss, Fa. Byk Gardner) bei einem Einstrahlwinkel von 85 ° auf der unbehandelten und behandelten Oberfläche der Kunststoffplatte bestimmt. Die Differenz der Glanzwerte zwischen unbehandelter und behandelter Kunststoffplatte ist die in der Tabelle angegebene Glanzveränderung.

Tabelle 11, Glanzänderung der Kunststoffplatte:

| Änderung des Glanzwertes gegenüber einer unbehandelten Kunststoffplatte | |
|---|---|
| - Emulsion (E-4) vor Abspülen | 0,9 GU |
| - Emulsion (E-4) nach Abspülen | 0,9 GU |

Das glatte Substrat Kunststoff erfährt durch Behandlung mit der erfindungsgemäßen Formulierung (E-4) eine überraschend deutliche Glanzsteigerung, die auch nach Behandlung mit Wasser permanent ist.

**Patentansprüche**

1. Öl-in-Wasser Emulsionen, die

(i) 100 Gew.-Teile von bei 20 °C flüssigen Aminoalkylgruppen aufweisendem Polyorganosiloxan (P), das mindestens 80 Mol-% Einheiten, ausgewählt aus Einheiten der allgemeinen Formeln Ia, Ib, IIa und IIb

$$R^1_2SiO(2/2) \qquad (Ia),$$

$$R^1_aR^2SiO_{(3-a)/2} \qquad (Ib),$$

$$R^3_3SiO_{(1/2)} \qquad (IIa),$$

$$R^3_2R^4SiO_{(1/2)} \qquad (IIb),$$

enthält, in denen

**a** den Wert 0 oder 1 bedeutet,
**R$^1$** unsubstituierte oder mit Halogenen substituierte Alkylreste mit 1-40 Kohlenstoffatomen bedeutet,
**R$^2$** Aminoalkylrest der allgemeinen Formel III

$$-R^5-NR^6R^7 \qquad (III),$$

wobei
**R$^5$** zweiwertigen Kohlenwasserstoffrest mit 1-40 Kohlenstoffatomen,
**R$^6$** einwertigen Kohlenwasserstoffrest mit 1-40 Kohlenstoffatomen, Wasserstoff oder Alkanoylrest und
**R$^7$** einen Rest der allgemeinen Formel IV

$$-(R^8-NR^6)_x R^6 \qquad (IV),$$

bedeuten, wobei
**x** den Wert 0 oder einen ganzzahligen Wert von 1 bis 40 und
**R$^8$** einen zweiwertigen Rest der allgemeinen Formel V

$$-(CR^9R^9-)_y \qquad (V),$$

bedeutet, wobei
**y** einen ganzzahligen Wert von 1 bis 6,
**R$^9$** Wasserstoff oder Kohlenwasserstoffrest mit 1-40 Kohlenstoffatomen bedeuten,
**R$^3$** unsubstituierte oder mit Halogenen substituierte Alkylreste mit 1-40 Kohlenstoffatomen bedeuten,
**R$^4$** Reste -OR oder -OH bedeuten und,
**R** unsubstituierte oder mit Halogenen substituierte Alkylreste mit 1-40 Kohlenstoffatomen bedeuten,

wobei im Polyorganosiloxan (P) das durchschnittliche Verhältnis der Einheiten der allgemeinen Formeln Ia und Ib zur Summe aus Einheiten der allgemeinen Formeln IIa und IIb 0,5 bis 500 beträgt und Polyorganosiloxan (P) eine durchschnittliche Aminzahl von mindestens 0,1 mequiv/g aufweist,
(ii) Protonierungsmittel,
(iii) 1 bis 80 Gew.-Teile von Silicatverbindung, ausgewählt aus dem Tetraalkoxysilicat der allgemeinen Formel VI

$$R^{10}O_4Si \qquad (VI),$$

und Polysilicatverbindung, die mindestens 80 Mol-% Einheiten der allgemeinen Formeln VII und VIII und mindestens 2 Einheiten der allgemeinen Formel VII

$$R^{10}O_3SiO_{1/2} \qquad (VII),$$

$$R^{10}O_2SiO_{2/2} \qquad (VIII),$$

aufweist, und deren Gemischen, wobei

**R$^{10}$** unsubstituierte oder mit Halogenen substituierte Kohlenwasserstoffreste mit 1-18 Kohlenstoffatomen bedeuten,

(iv) Wasser,
(v) höchstens 5 Gew.-Teile Emulgator
sowie
(vi) mindestens 5 Gew.-Teile eines organischen Lösemittels, ausgewählt aus Monoalkoholen der allgemeinen Formel IX

$$R^{11}-OH \qquad (IX),$$

und Dialkoholmonoethern der allgemeinen Formel X

$$R^{12}O\text{-}R^{13}\text{-}OR^{14} \qquad (X),$$

und deren Gemischen, wobei

$R^{11}$ einwertige Kohlenwasserstoffreste mit 2-18 Kohlenstoffatomen bedeuten,
$R^{12}$ einwertige Kohlenwasserstoffreste mit 1-18 Kohlenstoffatomen bedeuten,
$R^{13}$ zweiwertige Kohlenwasserstoffreste mit 2-12 Kohlenstoffatomen bedeuten,
$R^{14}$ Wasserstoff, einwertige Kohlenwasserstoffreste mit 1-6 Kohlenstoffatome oder die Acetyl-Gruppe bedeuten, mit der Maßgabe, dass die Emulsion höchstens 10 Gew.-Teile eines Di-, Tri- oder Oligogycolethers der allgemeinen Formel XI

$$R^{12}\text{-}O\text{-}(CH_2CH_2)_m\text{-}OH \qquad (XI),$$

aufweist, wobei
$R^{15}$ die Bedeutung von $R^{12}$ besitzt und
$m$ eine ganze Zahl und gleich 2 oder größer ist.

2. Emulsionen nach Anspruch 1, bei denen die Reste $R^1$ und $R^3$ Alkylreste mit 1 bis 6 Kohlenstoffatomen bedeuten.

3. Emulsionen nach Anspruch 1 oder 2, bei denen die Reste $R^6$ Alkylreste mit 1 bis 6 Kohlenstoffatomen, Wasserstoff oder Acetyl bedeuten.

4. Emulsionen nach einem der vorangehenden Ansprüche, bei denen die Reste $R^2$ ausgewählt werden aus -$CH_2N(R^6)_2$, -$(CH_2)_3N(R^6)_2$ und -$(CH_2)_3N(R^6)(CH_2)_2N(R^6)_2$.

5. Emulsionen nach einem der vorangehenden Ansprüche, bei denen das Protonierungsmittel ausgewählt wird aus Ameisensäure, Essigsäure, Schwefelsäure und Salzsäure.

6. Emulsionen nach einem der vorangehenden Ansprüche, bei denen die Reste $R^{10}$ ausgewählt werden aus Methyl, Ethyl und Propyl.

7. Emulsionen nach einem der vorangehenden Ansprüche, bei denen die Reste $R^{11}$ Alkylreste mit 2 bis 12 Kohlenstoffatome bedeuten.

8. Emulsionen nach einem der vorangehenden Ansprüche, bei denen die Reste $R^{12}$ Alkylreste mit 1 bis 12 Kohlenstoffatome bedeuten, bei denen die Reste $R^{13}$ Alkylenreste mit 2 bis 6 Kohlenstoffatome und bei denen die Reste $R^{14}$ ein Wasserstoffatom bedeuten.

9. Verfahren zur Behandlung von Substraten mit den Öl-in-Wasser-Emulsionen gemäß einem der vorangehenden Ansprüche.

**Claims**

1. Oil-in-water emulsions comprising

(i) 100 parts by weight of polyorganosiloxane (P) comprising aminoalkyl groups liquid at 20°C, comprising at least 80 mol% units selected from units of the general formulae Ia, Ib, IIa and IIb

$$R^1_2SiO_{(2/2)} \qquad (Ia),$$

$$R^1_aR^2SiO_{(3-a)/2} \qquad (Ib),$$

$$R^3_3SiO_{(1/2)} \qquad (IIa),$$

$$R^3_2R^4SiO_{(1/2)} \qquad (IIb),$$

in which

**a** has the value 0 or 1,
**R¹** are alkyl radicals having 1-40 carbon atoms that are unsubstituted or substituted by halogens,
**R²** is an aminoalkyl radical of the general formula III

$$-R^5-NR^6R^7 \qquad (III),$$

where
**R⁵** is a divalent hydrocarbon radical having 1-40 carbon atoms,
**R⁶** is a monovalent hydrocarbon radical having 1-40 carbon atoms, hydrogen or alkanoyl radical and
**R⁷** is a radical of the general formula IV

$$-(R^8-NR^6)_xR^6 \qquad (IV),$$

where
**x** has the value 0 or an integer value of 1 to 40 and
**R⁸** is a divalent radical of the general formula V

$$-(CR^9R^9-)_y \qquad (V),$$

where
**y** has an integer value of 1 to 6,
**R⁹** is hydrogen or hydrocarbon radical having 1-40 carbon atoms,
**R³** are alkyl radicals having 1-40 carbon atoms that are unsubstituted or substituted by halogens,
**R⁴** are -OR or -OH radicals and,
**R** are alkyl radicals having 1-40 carbon atoms that are unsubstituted or substituted by halogens,
wherein the average ratio of the units of the general formulae Ia and Ib to the sum total of units of the general formulae IIa and IIb in the polyorganosiloxane (P) is 0.5 to 500 and polyorganosiloxane (P) has an average amine number of at least 0.1 mequiv/g,

(ii) protonating agent,
(iii) 1 to 80 parts by weight of silicate compound selected from the tetraalkoxysilicate of the general formula VI

$$R^{10}O_4Si \qquad (VI),$$

and polysilicate compound comprising at least 80 mol% units of the general formulae VII and VIII and at least 2 units of the general formula VII

$$R^{10}O_3SiO_{1/2} \qquad (VII),$$

$$R^{10}O_2SiO_{2/2} \qquad (VIII),$$

and mixtures thereof, where
**R¹⁰** are hydrocarbon radicals having 1-18 carbon atoms that are unsubstituted or substituted by halogens,
(iv) water,
(v) at most 5 parts by weight emulsifier and
(vi) at least 5 parts by weight of an organic solvent selected from monoalcohols of the general formula IX

$$R^{11}-OH \qquad (IX),$$

and dialcohol monoethers of the general formula X

$$R^{12}O-R^{13}-OR^{14} \qquad (X),$$

and mixtures thereof, where

**R¹¹** are monovalent hydrocarbon radicals having 2-18 carbon atoms,
**R¹²** are monovalent hydrocarbon radicals having 1-18 carbon atoms,
**R¹³** are divalent hydrocarbon radicals having 2-12 carbon atoms,

**R$^{14}$** is hydrogen, monovalent hydrocarbon radicals having 1-6 carbon atoms or the acetyl group,
with the proviso that the emulsion comprises at most 10 parts by weight of a di-, tri- or oligoglycol ether of
the general formula XI

$$R^{12}\text{-}O\text{-}(CH_2CH_2)_m\text{-}OH \qquad (XI),$$

where
**R$^{15}$** has the definition of **R$^{12}$** and
**m** is an integer and is 2 or greater than 2.

2. Emulsions according to Claim 1, in which the radicals **R$^1$** and **R$^3$** are alkyl radicals having 1 to 6 carbon atoms.

3. Emulsions according to Claim 1 or 2, in which the radicals **R$^6$** are alkyl radicals having 1 to 6 carbon atoms, hydrogen or acetyl.

4. Emulsions according to any of the preceding claims, in which the radicals **R$^2$** are selected from -CH$_2$N(R$^6$)$_2$, -(CH$_2$)$_3$N(R$^6$)$_2$ and -(CH$_2$)$_3$N(R$^6$) (CH$_2$)$_2$N(R$^6$)$_2$.

5. Emulsions according to any of the preceding claims, in which the protonating agent is selected from formic acid, acetic acid, sulfuric acid and hydrochloric acid.

6. Emulsions according to any of the preceding claims, in which the radicals **R$^{10}$** are selected from methyl, ethyl and propyl.

7. Emulsions according to any of the preceding claims, in which the radicals **R$^{11}$** are alkyl radicals having 2 to 12 carbon atoms.

8. Emulsions according to any of the preceding claims, in which the radicals **R$^{12}$** are alkyl radicals having 1 to 12 carbon atoms, in which the radicals **R$^{13}$** are alkylene radicals having 2 to 6 carbon atoms and in which the radicals **R$^{14}$** are a hydrogen atom.

9. Process for treating substrates with the oil-in-water emulsions according to any of the preceding claims.


**Revendications**

1. Émulsions huile-dans-eau qui contiennent

(i) 100 parties en poids de polyorganosiloxane liquide à 20°C, présentant des groupes aminoalkyle (P), qui contient au moins 80% en mole de motifs, choisis parmi les motifs des formules générales Ia, Ib, IIa et IIb

$$R^1{}_2SiO_{(2/2)} \qquad (Ia),$$

$$R^1{}_aR^2SiO_{(3-a)/2} \qquad (Ib),$$

$$R^3{}_3SiO_{(1/2)} \qquad (IIa),$$

$$R^3{}_2R^4SiO_{(1/2)} \qquad (IIb),$$

dans lesquelles

a signifie la valeur 0 ou 1,
R$^1$ signifie des radicaux alkyle non substitués ou substitués par des halogènes, comprenant 1-40 atomes de carbone,
R$^2$ signifie un radical aminoalkyle de formule générale III

$$-R^5\text{-}NR^6R^7 \qquad (III),$$

où

R$^5$ signifie un radical hydrocarboné divalent comprenant 1-40 atomes de carbone,
R$^6$ signifie un radical hydrocarboné monovalent comprenant 1-40 atomes de carbone, hydrogène ou un radical alcanoyle et
R$^7$ signifie un radical de formule générale IV

$$- (R^8-NR^6)_x R^6 \qquad (IV),$$

où

x signifie la valeur 0 ou une valeur entière de 1 à 40 et
R$^8$ signifie un radical divalent de formule générale V

$$-(CR^9R^9-)_y \qquad (V),$$

où

y signifie une valeur entière de 1 à 6,
R$^9$ signifie hydrogène ou un radical hydrocarboné comprenant 1-40 atomes de carbone,
R$^3$ signifie des radicaux alkyle non substitués ou substitués par des halogènes, comprenant 1-40 atomes de carbone,
R$^4$ signifie les radicaux -OR ou -OH et
R signifie des radicaux alkyle non substitués ou substitués par des halogènes, comprenant 1-40 atomes de carbone,

où, dans le polyorganosiloxane (P), le rapport moyen des motifs des formules générales Ia et Ib à la somme des motifs des formules générales IIa et IIb vaut 0,5 à 500 et le polyorganosiloxane (P) présente un indice d'amine moyen d'au moins 0,1 méquiv/g,
(ii) des agents de protonation,
(iii) 1 à 80 parties en poids d'un composé de type silicate, choisi parmi le tétraalcoxysilicate de formule générale VI

$$R^{10}O_4Si \qquad (VI),$$

et un composé polysilicate, qui contient au moins 80% en mole de motifs des formules générales VII et VIII et au moins 2 motifs de formule générale VII

$$R^{10}O_3SiO_{1/2} \qquad (VII),$$

$$K^{10}O_2SiO_{2/2} \qquad (VIII),$$

et leurs mélanges, où

R$^{10}$ signifie des radicaux hydrocarbonés non substitués ou substitués par des halogènes, comprenant 1-18 atomes de carbone,

(iv) de l'eau,
(v) au plus 5 parties en poids d'un émulsifiant ainsi que
(vi) au moins 5 parties en poids d'un solvant organique, choisi parmi les monoalcools de formule générale IX

$$R^{11}-OH \qquad (IX),$$

et les dialcoolmonoéthers de formule générale X

$$R^{12}O-R^{13}-OR^{14} \qquad (X),$$

et leurs mélanges, où

R$^{11}$ signifie des radicaux hydrocarbonés monovalents comprenant 2-18 atomes de carbone,
R$^{12}$ signifie des radicaux hydrocarbonés monovalents comprenant 1-18 atomes de carbone,
R$^{13}$ signifie des radicaux hydrocarbonés divalents comprenant 2-12 atomes de carbone,
R$^{14}$ signifie hydrogène, des radicaux hydrocarbonés monovalents comprenant 1-6 atomes de carbone ou le groupe acétyle, à condition que l'émulsion présente au plus 10 parties en poids d'un diglycoléther, d'un triglycoléther ou d'un oligoglycoléther de formule générale XI

$$R^{12}\text{-O-}(CH_2CH_2)_m\text{-OH} \qquad (XI),$$

où

R$^{15}$ présente la signification de R$^{12}$ et
m représente un nombre entier et est supérieur ou égal à 2.

2. Émulsions selon la revendication 1, dans lesquelles les radicaux R$^1$ et R$^3$ signifient des radicaux alkyle comprenant 1 à 6 atomes de carbone.

3. Émulsions selon la revendication 1 ou 2, dans lesquelles les radicaux R$^6$ signifient des radicaux alkyle comprenant 1 à 6 atomes de carbone, hydrogène ou acétyle.

4. Émulsions selon l'une quelconque des revendications précédentes, dans lesquelles les radicaux R$^2$ sont choisis parmi -CH$_2$N(R$^6$)$_2$, -(CH$_2$)$_3$N(R$^6$)$_2$ et -(CH$_2$)$_3$N(R$^6$)(CH$_2$)$_2$N(R$^6$)$_2$.

5. Émulsions selon l'une quelconque des revendications précédentes, dans lesquelles l'agent de protonation est choisi parmi l'acide formique, l'acide acétique, l'acide sulfurique et l'acide chlorhydrique.

6. Émulsions selon l'une quelconque des revendications précédentes, dans lesquelles les radicaux R$^{10}$ sont choisis parmi méthyle, éthyle et propyle.

7. Émulsions selon l'une quelconque des revendications précédentes, dans lesquelles les radicaux R$^{11}$ signifient des radicaux alkyle comprenant 2 à 12 atomes de carbone.

8. Émulsions selon l'une quelconque des revendications précédentes, dans lesquelles les radicaux R$^{12}$ signifient des radicaux alkyle comprenant 1 à 12 atomes de carbone, dans lesquelles les radicaux R$^{13}$ signifient des radicaux alkylène comprenant 2 à 6 atomes de carbone et dans lesquelles les radicaux R$^{14}$ signifient un atome d'hydrogène.

9. Procédé pour le traitement de substrats par les émulsions huile-dans-eau selon l'une quelconque des revendications précédentes.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014216380

**In der Beschreibung aufgeführte Nicht-Patentliteratur**

- Ullmann's Encyclopedia of Industrial Chemistry. Wiley-VCH Verlag, 2003
- *Konstante nach VWR-Laborkatalog,* 2011, 645, , 8
- **G. ENGELHARDT ; H. JANCKE.** Über die H-, C- und Si-NMR chemischen Verschiebungen einiger linearer, verzweigter und cyclischer Methyl-Siloxan-Verbindungen. *J. Organometal. Chem.,* 1971, vol. 28, 293-300
- NMR spectroscopy of organosilicon compounds. **ELIZABETH A. WILLIAMS.** The Chemistry of Organic Silicon Compounds. John Wiley and Sons Ltd, 1989, 511-533